# FASCICULE DE BREVET EUROPEEN

(11) **EP 3 024 897 B1**
(45) Date de publication et mention de la délivrance du brevet: **02.06.2021**
(21) Numéro de dépôt: 14741569.9
(22) Date de dépôt: 16.07.2014
(51) Int. Cl.: C09D 5/02, C09D 5/08, C09D 7/61, C09D 7/48, C09D 5/00

(54) **COMPOSITION COMPORTANT UNE PHASE ORGANIQUE CONTINUE ET UNE EMULSION INVERSE, POUR RECOUVRIR UNE SURFACE METALLIQUE ET PROCEDE DE FABRICATION DE LADITE COMPOSITION**
ZUSAMMENSETZUNG ENTHALTEND EINE ORGANISCHE KONTINUIERLICHE PHASE UND EINE INVERSE EMULSION, UM EINE METALLISCHE OBERFLÄCHE ZU BESCHICHTEN UND DESSEN VERFAHREN ZUR HERSTELLUNG
COMPOSITION COMPRISING AN ORGANIC CONTINUOUS PHASE AND AN INVERSE EMULSION TO COAT A METALLIC SURFACE AND PROCESS TO PRODUCE SAID COMPOSITION

(30) Priorité: 26.07.2013 FR 1357417
(43) Date de publication de la demande: 01.06.2016
(73) Titulaire: Societe Nouvelle Des Couleurs Zinciques, 59111 Bouchain (FR)
(72) Inventeur: BERTELOOT, Christelle, F-59179 Fenain (FR); MAVEL, Ludovic, F-59111 Hordain (FR); GIBB, Alexander, F-95490 Vaureal (FR); BIBETTE, Jérôme, F - 75005 Paris (FR); DEMOULIN, Damien, F - 75019 Paris (FR)
(74) Mandataire: Marks & Clerk France
(86) Numéro de dépôt international: PCT/EP2014/065235
(87) Numéro de publication internationale: WO 2015/010987

(56) Documents cités:
- EP-A1- 1 842 881
- WO-A1-2010/018763
- US-A1- 2004 104 378
- US-A1- 2008 063 804
- US-A1- 2009 117 369
- DATABASE CAPLUS [Online] CHEMICAL ABSTRACTS SERVICE, COLUMBUS, OHIO, US; 17 septembre 1994 (1994-09-17), MILIC, R.: "Anticorrosion pigments in water-thinned coatings", XP002721311, extrait de STN Database accession no. 1994:536244 -& MILIC, R.: "Anticorrosion pigments in water-thinned coatings", INT. CONF. PROD. APPL. SPEC. INORG. PIGM. , 141-9. EDITOR(S): KALENDA, PETR. PUBLISHER: UNIV. CHEM. TECHNOL., DEP. POLYM., PARDUBICE, CZECH REP. CODEN: 60DMAR, 1993, pages 141-149, XP009176685,

## Description

Le domaine de l'invention est celui des compositions destinées à permettre l'élaboration de revêtement sur une surface métallique et capable d'assurer notamment une bonne protection de celle-ci.

Avantageusement, la composition peut servir de primaire de peinture, trouvant des applications très diverses pour lesquelles on est amené à proposer des revêtements assurant une bonne protection contre les phénomènes de corrosion.

Dans ce domaine, actuellement des agents tels que les chromates sont utilisés car étant des oxydants puissants et donc aussi des antioxydants efficaces de surfaces qu'ils protègent en présence d'eau et d'oxygène. Ils sont utilisés comme pigments anti-corrosion dans des formulations organiques (peintures), et peu solubles dans l'eau.

Néanmoins, les sels de chromates sont nocifs en raison de leur grand pouvoir oxydant, et doivent être remplacés par d'autres substances aux propriétés anti-oxydantes plus faibles mais moins toxiques.

De manière générale, une peinture appliquée sur un métal, cesse d'être efficace lorsqu'une blessure survient à la surface. L'eau combinée à l'oxygène de l'air et aux polluants atmosphériques, démarre alors le processus de corrosion du métal par exemple à base d'aluminium ou de fer.

Pour renforcer la protection d'une surface métallique à revêtir, on procède généralement à un premier traitement, dit pré-traitement de surface en présence d'agents de traitement de surface qui sont des agents chimiques modifiant la surface à enduire afin de la protéger.

On réalise en parallèle un primaire d'adhésion ou primaire de peinture à base de solvant, de résine, de catalyseur et de charges minérales dont une espèce appelée pigment anti-corrosion et destiné à renforcer la protection contre la corrosion de la surface qui en sera enduite.

De manière classique, on dépose ce primaire d'adhésion sur la surface pré-traitée, puis on sèche ledit primaire avant de procéder au dépôt d'une couche de finition de peinture.

Alors que l'opération de pré-traitement est effectuée en présence de solution aqueuse, l'opération d'enduction du primaire d'adhésion est effectuée en phase solvant, l'ensemble des opérations comportent ainsi deux types d'opérations dans des milieux différents.

Partant de ce contexte, et de l'ensemble des paramètres en présence, le Demandeur s'est tourné vers les principes de l'encapsulation et du relargage contrôlé, afin d'augmenter les performances d'un agent fonctionnel. Ce concept a déjà été proposé sous différentes formes dans des domaines aussi divers que la parfumerie, la détergence, la médecine, l'imagerie médicale, la cosmétique, ou l'alimentation.

De manière générale, un vecteur colloïdal apporte une efficacité, s'il est capable de protéger le principe actif, jusqu'au site de délivrance. En médecine un exemple bien connu concerne la capture passive par les tumeurs de colloïdes de 50 nm; si ces colloïdes contiennent une substance active, elle se trouve naturellement enrichie dans la zone à traiter. En parfumerie industrielle par exemple, il s'agira de prolonger l'odeur après ouverture du pack.

Ainsi le Demandeur est parti du principe que des capsules d'antioxydants doivent pouvoir délivrer leur contenu localement afin de consommer cet oxygène tout en, si possible, réparant la blessure en plus et propose une solution originale de composition intégrant une phase hydrophile incorporant l'agent de traitement de surface, dans une phase organique continue.

Dans le domaine des peintures, de manière générale, l'incorporation d'un agent de traitement de surface a pour objectif de reproduire au mieux les mêmes propriétés qu'un traitement de surface conventionnel type traitement de conversion. Son rôle principal est l'adhérence qui par conséquent permet une meilleure résistance à la corrosion du primaire. L'agent chimique de traitement de surface présente une solubilité en solution aqueuse proche de 100%.

Les pigments anticorrosion permettent quant à eux de diminuer les vitesses de corrosion. L'eau qui transperce le film de peinture va venir dissoudre une partie du pigment qui, à son contact, forme des composés de précipitation écrans imperméables qui empêche à l'eau, l'oxygène et aux sels d'atteindre le métal. Le pigment anticorrosion présente quant à lui, une solubilité en solution aqueuse, très faible pouvant typiquement être de l'ordre de quelques ppm.

Dans ce contexte, la présente invention a pour objet une composition destinée à recouvrir une surface métallique et comportant une phase continue organique, ladite phase continue organique comportant au moins un pigment anti-corrosion, caractérisée en ce qu'elle comporte en outre une phase hydrophile dispersée dans ladite phase continue organique, ladite phase hydrophile comportant un agent chimique de traitement de surface de ladite surface métallique.

Selon une variante de l'invention, la composition comprend en outre au moins un agent tensio-actif, pouvant être anionique, cationique, amphotère, non ionique.

Selon une variante de l'invention, la phase organique comprend au moins une résine.

Selon une variante de l'invention, la phase organique comprend un solvant.

Selon une variante de l'invention, la phase organique comprend au moins un additif et/ou au moins une charge minérale.

Selon une variante de l'invention, le pigment anti-corrosion est un sel métallique comprenant :
- un cation métallique et/ou alcalin et/ou alcalinoterreux, ledit métal étant du zinc, ou du magnésium, ou du calcium, ou de l'aluminium, ou du potassium, ou du strontium, ou du baryum ou du molybdène, ou une terre rare ;
- un anion étant un chromate ou un phosphate ou un silicate, ou un borate ou un carbonate ou un polyphosphate ou un molybdate.

Selon une variante de l'invention, la phase hydrophile est de l'eau et/ou un solvant oxygéné et/ou un alcool et/ou une cétone.

Selon une variante de l'invention, l'agent chimique de traitement de surface comprend un composé de type nitrate, ou tungstate ou vanadate, ou permanganate, ou phosphate ou phosphomolybdate ou phosphotungstate ou phosphite ou sulfite ou molybdate ou tungstate ou chromate ou dichromate ou polyphosphates ou borate ou zirconate ou benzoate ou citrate ou salicylate ou adipate.

Selon une variante de l'invention, l'agent chimique de traitement de surface comprend un nitrate de cérium ou un nitrate de lanthane.

Selon une variante de l'invention, l'agent chimique de traitement de surface comprend un tungstate d'ammonium ou de potassium ou de sodium.

Selon une variante de l'invention, l'agent chimique de traitement de surface comprend un orthovanadate de sodium ou un metavanadate de sodium.

Selon une variante de l'invention, l'agent chimique de traitement de surface comprend un permanganate d'ammonium ou de calcium ou de magnésium ou de sodium.

Selon une variante de l'invention, l'agent chimique de traitement de surface comprend un phosphate monocalcique ou un phosphate trisodique ou un phosphate de sodium dibasique ou un phosphate de sodium monobasique ou un polyphosphate de sodium ou un phosphate de sodium ou un phosphate de manganèse monobasique.

Selon une variante de l'invention, l'agent chimique de traitement de surface comprend un phosphomolybdate de sodium.

Selon une variante de l'invention, l'agent chimique de traitement de surface comprend un phosphotungstate de sodium.

Selon une variante de l'invention, l'agent chimique de traitement de surface comprend un phosphite de sodium dibasique ou un hypophosphite de sodium ou un hypophosphite de calcium ou un hypophosphite de magnésium ou un hypophosphite de manganèse.

Selon une variante de l'invention, l'agent chimique de traitement de surface comprend un sulfite de sodium ou de calcium.

Selon une variante de l'invention, les charges minérales comprennent de l'oxyde de titane et/ou de la silice et/ou du talc et/ou du mica et/ou de l'oxyde de fer et/ou des carbonates.

Selon une variante de l'invention, l'additif est un catalyseur ou un siccatif ou un accélérateur ou un durcisseur.

Selon une variante de l'invention, le solvant est à base d'éther glycol, préférentiellement de Dowanol PMA - acétate de 2-méthoxy-1-méthyl éthyle - de la société Brenntag et comprend en outre du Solvesso 150 - Naphtalene C10H8 - de la société EXXON.

L'invention a aussi pour objet un procédé de fabrication d'une composition selon l'invention, caractérisé en ce qu'il comprend :
- la réalisation d'une émulsion ou d'une micro-émulsion comprenant :
   ∘ la réalisation d'un mélange d'une phase hydrophile avec un agent chimique de traitement de surface et un solvant ;
   ∘ un traitement mécanique dudit mélange permettant d'obtenir ladite émulsion ou ladite micro-émulsion ;
- l'incorporation de ladite émulsion ou de ladite micro-émulsion dans une phase organique continue, comportant au moins un pigment anti-corrosion.

Selon une variante de l'invention, la réalisation dudit mélange est effectuée en présence d'un agent tensio-actif.

Selon une variante de l'invention, la phase organique comporte un solvant identique à celui de ladite émulsion ou micro-émulsion.

Selon une variante de l'invention, la phase organique comprend en outre, un solvant, une résine, un catalyseur et des charges minérales.

L'invention sera mieux comprise et d'autres avantages apparaîtront à la lecture de la description qui va suivre donnée à titre non limitatif et grâce aux figures parmi lesquelles :
- la figure 1 illustre le principe d'une émulsion stable ;
- les figures 2a et 2b illustrent un revêtement de peinture utilisant respectivement un primaire selon l'art connu et un primaire selon la présente invention ;
- les figures 3a, 3b et 3c illustrent les diagrammes de phase d'un mélange solvant, eau salée, agent de traitement de surface permettant de mettre en évidence la stabilité d'une émulsion inverse phase hydrophile dans phase organique, utilisée dans la composition de la présente invention ;
- les figures 4a, 4b, 5a, 5b, 5c, 5d, 6a, 6b, 6c, 6d, 7a, 7b, 7c, 7d, 8a, 8b, 9a, 9b, 9c, 10a, 10b et 10c illustrent des résultats de tests réalisés sur des primaires avec ou sans traitement de surface, comprenant différentes sortes de pigments, avec ou sans poudre d'agent de traitement de surface, avec ou sans émulsion incorporant un agent de traitement de surface et ce en présence de brouillard salin ou en chambre humide.

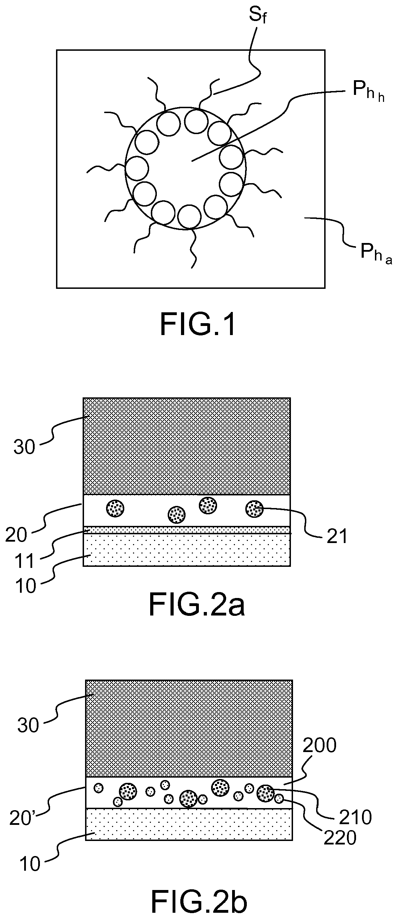

De manière générale, la composition de la présente invention comporte une phase organique continue et une phase hydrophile dispersée dans ladite phase organique continue, la phase hydrophile comprenant un agent chimique de traitement de surface. La figure 1 schématise une telle composition et met en évidence : la phase organique continue Phₐ, la phase hydrophile Phₕ comprenant des agents tensio-actifs surfactants S_{f} avec une tête hydrophile et une queue hydrophobe.

Selon la présente invention, la phase hydrophile comporte en outre un agent chimique de traitement de surface.

L'invention va être décrite ci-après dans son utilisation pour primaire d'adhésion destiné à recouvrir et à protéger une surface métallique, dans le cadre des peintures, de manière non limitative.

Le Demandeur propose ainsi d'exploiter les avantages que l'on peut tirer du concept d'émulsion ou de micro-émulsion et d'introduire ainsi des agents chimiques de traitement de surface de très petites tailles dans une peinture classique, l'émulsion se dispersant simplement dans ladite peinture. En l'absence d'émulsion et en présence de particules de traitements de surface, il aurait fallu avoir recours à une étape de broyage constituant une perte de temps et une augmentation de coût.

La figure 2a illustre à ce titre, un revêtement de peinture selon l'art connu d'une surface métallique 10, comportant une couche de traitement de surface 11, un primaire d'adhésion 20, après phases d'application et de séchage et comprenant un pigment anti-corrosion 21 et une couche de finition 30.

La figure 2b illustre, un revêtement de peinture intégrant la composition de la présente invention, avec un primaire d'adhésion 20' après phases d'application et de séchage et comprenant une phase organique continue 200 comportant notamment un pigment anti-corrosion 210 et une émulsion 220 incorporant dans une phase hydrophile, un agent chimique de traitement de surface.

Le Demandeur a réalisé différents tests comparatifs pour mettre en évidence l'intérêt et les performances de la composition de la présente invention destinée à recouvrir une surface métallique.

Le Demandeur mentionne qu'il est possible de jouer sur plusieurs paramètres afin d'avoir les meilleures performances possibles : la taille des gouttelettes, la concentration en principe actif (agent chimique de traitement de surface) dans les gouttelettes, la concentration de l'émulsion dans le feuil et la porosité du feuil, destiné à être déposé sur une surface métallique à recouvrir.

La présente invention va être décrite ci-après en détails dans un exemple non limitatif et utilisant du nitrate de cérium, avec lequel des tests ont permis de valider le concept et l'intérêt de l'utilisation d'une émulsion inverse phase hydrophile dans phase hydrophobe, et ce dans le contexte des primaires d'adhésion pour peinture.

Dans une première étape le Demandeur a analysé la stabilité de l'émulsion inverse phase hydrophile dans phase organique continue, selon la présente invention :
Le protocole suivi par le Demandeur est le suivant :
- produits pour réaliser ladite émulsion :
   - solvant 62% Solvesso 150 / 38% PMA ;
   - tensioactif ou surfactant : Disperbyk 2025 de la société Byk ;
   - eau salée avec plusieurs concentrations de nitrate de cérium ;
- mélange de tous les composants ;
- émulsification à la sonde à ultrasons dudit mélange ;
- observation des résultats après 2 semaines à température ambiante.

### Première étude de stabilité : chargement à 50g/L en Ce(NO₃)_{3,} 6H₂O.

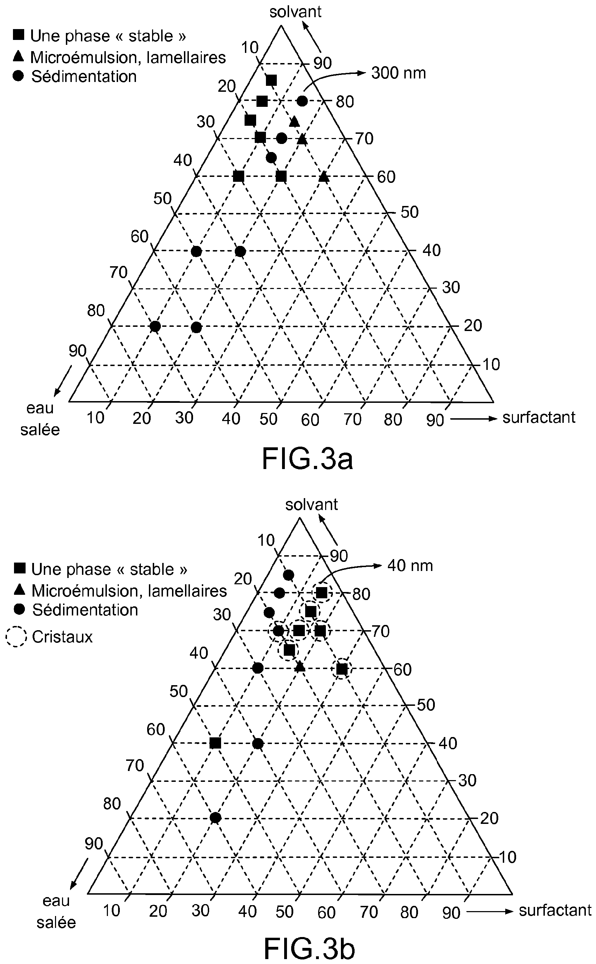

On obtient le diagramme de phase illustré en figure 3a qui met en évidence des pourcentages avec lesquels on arrive à obtenir des micro-émulsions.

### Deuxième étude de stabilité : chargement à 400g/L en Ce(NO₃)₃, 6H₂O.

On obtient le diagramme de phase illustré en figure 3b qui met en évidence des pourcentages avec lesquels on arrive à obtenir des micro-émulsions et l'apparition de cristaux.

### Troisième étude de stabilité : chargement à 2000g/L en Ce(NO₃)₃, 6H₂O.

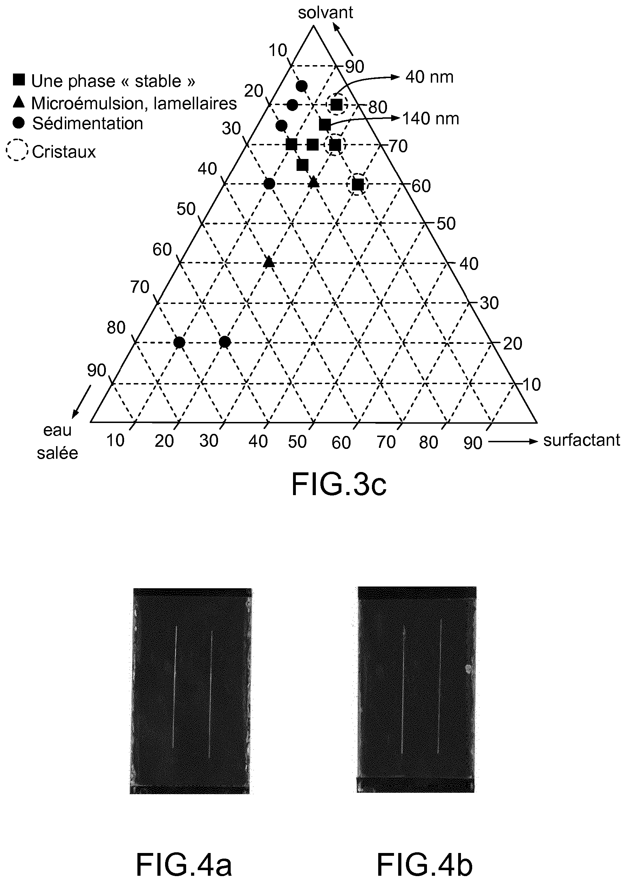

On obtient le diagramme de phase illustré en figure 3c qui met en évidence des pourcentages avec lesquels on arrive à obtenir des micro-émulsions et l'apparition de cristaux.

Le Demandeur a ainsi mis en évidence :
- l'effet de la concentration en sel, soit une diminution de la tension de surface quand la quantité de sel augmente : les gouttes sont plus petites donc l'émulsion plus stable ;
- la présence d'une phase lamellaire ou micro-émulsion proche de la nano-émulsion ;
- une plage de stabilité assez grande de l'émulsion : la minimisation du risque de déstabilisation de l'émulsion si la composition varie légèrement ;
- un problème de cristallisation du sel : cette cristallisation est liée au mûrissement des gouttes (diffusion vers la phase continue) et favorisée par une faible taille des gouttes (augmentation de la pression interne des gouttes), et qui correspond à 10% à 20% de la quantité initiale de sel.

Dans une seconde étape, le Demandeur a mélangé l'émulsion stable préalablement obtenue à des constituants classiques de primaire de peinture destiné à recouvrir une surface métallique, ledit primaire étant dénommé couramment primaire « Coil Coating ».

La formule du primaire « Coil Coating » est la suivante.

La phase organique comprend une résine HMMM Hexamethoxymethyl Mélamine, une résine polyester, et un mélange de solvants et plus précisément :

| Matières Premières | Poids | Fonctionnalité |
|---|---|---|
| Cymel C303 | 5.4% | Résine HMMM Hexamethoxymethyl Mélamine |
| Desmophen 1665 | 47.6% | Résine polyester |
| Solvesso 150 | 10.7% | Solvant aromatique Naphtalène |
| Dowanol PMA | 15.4% | Solvant Ether de glycol |

On procède au mélange de la phase organique avec ces charges minérales dont le pigment anti-corrosion NOVINOX XCA02 de la société SNCZ, silice au calcium, jusqu'à l'obtention d'une préparation homogène.

| | | |
|---|---|---|
| NOVINOX XCA02 | 7% | Pigment anti- corrosion |
| TiO2 RTC90 | 6.5% | Dioxyde de titane |
| Talc HAR T84 | 6.5% | Charge |
| Aerosil R972 | 0.4% | Dioxyde de silicium |

Puis on réalise le broyage du mélange préalablement obtenu jusqu'à obtention d'une finesse de 8 mesurée par une jauge de Hegman.

On y ajoute 0,5% en poids de catalyseur Nacure 2500 de la société King Industrie.

Le Demandeur a cherché à montrer les avantages de l'incorporation de l'émulsion dans ce primaire.

La description de la composition de N41 est décrite dans le tableau ci-dessous.

| Composé | Teneur | Détail | Teneur dans la formule |
|---|---|---|---|
| Solvant | 76% | 38% PMA | 28,9% PMA |
| | | 62% Solvesso 150 | 47,1% Solvesso 150 |
| Eau chargée en sel | 10% | Contenant un inhibiteur de corrosion | 1 0% 400g/L Ce(NO3)3, 6H2O |
| Surfactant | 14% | 1 00% Disperbyk 2025 | 14% Disperbyk 2025 |

Dans un premier temps des tests ont été entrepris pour vérifier que l'incorporation de l'émulsion N41 n'avait pas d'impacts négatifs sur les propriétés du primaire.

Un test pour vérifier la bonne réticulation du primaire contenant l'émulsion N41 a été réalisé.

Le primaire contenant un pigment anti-corrosion, le NOVINOX XCA02, a été comparé à un primaire contenant le pigment anticorrosion, le NOVINOX XCA02, plus 10% de l'émulsion N41.

Le primaire est frotté à l'aide d'un chiffon imbibé de MEC, Méthyl Ethyl Cétone. Le nombre d'allers et retours A/R, avant que le primaire ne se dégrade, est comptabilisé comme l'indique le tableau suivant.

| | **Primaire NOVINOX XCA02 sans émulsion N41** | **Primaire NOVINOX XCA02 +10% émulsion N41** |
|---|---|---|
| Test MEC A/R | 8 (J=0) | 9 (J=0) |
| | | 9 (J=30) |
| | | 8 (J=60) |

Les résultats montrent que l'incorporation de N41 n'a pas d'effet sur la réticulation des primaires à J=0. Le primaire contenant N41 est stable dans le temps.

Un test de pliage du substrat métallique a été réalisé pour vérifier le non arrachement du primaire contenant l'émulsion N41 appliqué sur celui-ci. Le pliage s'effectue à l'aide d'un mandrin conique.

| % N41 dans le primaire NOVINOX XCA02 | Arrachement |
|---|---|
| 0 | Aucun arrachement |
| 1 | Aucun arrachement |
| 3 | Aucun arrachement |

En conclusion, le primaire contenant l'émulsion N41 ne s'arrache pas.

Un test d'adhérence du substrat métallique a été réalisé pour vérifier la bonne adhérence du primaire contenant l'émulsion N41 appliqué sur celui-ci. Un quadrillage est réalisé sur le primaire, on y dépose un scotch ; lors du décollement de ce scotch on vérifie si le primaire reste intact.

| % N41 dans le primaire NOVINOX XCA02 | Adhérence |
|---|---|
| 0 | Aucun décollement |
| 1 | Aucun décollement |
| 3 | Aucun décollement |

En conclusion, le primaire contenant du N41 n'a pas de défaut d'adhérence.

Dans un second temps, une vérification des propriétés d'anti-corrosion de l'émulsion N41 a été entreprise grâce à des tests de brouillard salin, norme ASTM B117, et de chambre humide.

Des plaques HDG, pour « Hot Dip Galvanised Steel » d'acier galvanisé ont été recouvertes de primaire comprenant 7% en poids d'un pigment anti-corrosion de chromate de strontium (Référence L203E) de la société SNCZ et ont été testées, avec un traitement de surface (figure 4a) et sans traitement de surface (figure 4b) :
- avec traitement de surface :
   ∘ en présence d'un brouillard salin durant 300 heures, on n'observe aucun cloquage ;
   ∘ en chambre humide durant 300 heures, on n'observe aucun cloquage ;
- sans traitement de surface :
   ∘ en présence d'un brouillard salin durant 300 heures, on observe un peu cloquage ;
   ∘ en chambre humide durant 300 heures, on observe un cloquage important pleine plaque.

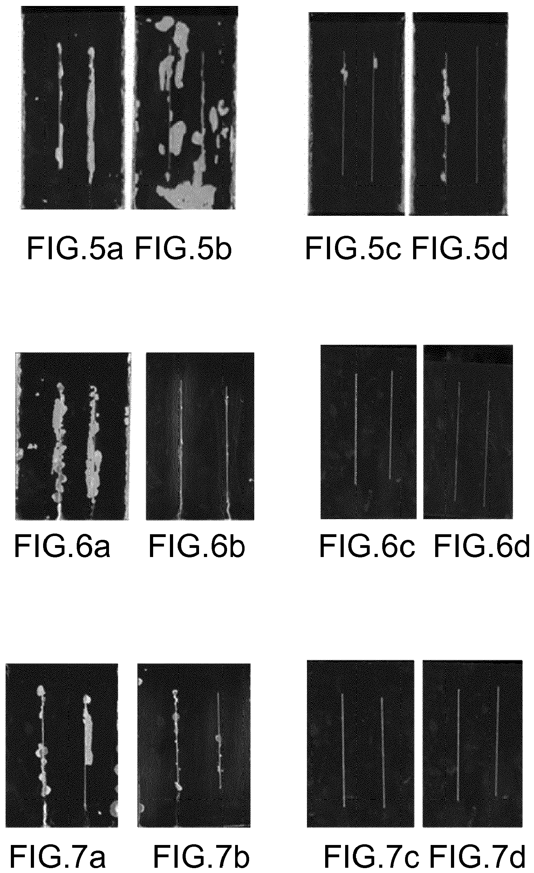

Des plaques HDG, pour « Hot Dip Galvanised Steel » d'acier galvanisé ont été recouvertes de primaire comprenant 7% en poids du pigment NOVINOX XCA02 et ont été testées, avec un traitement de surface (figure 5a), sans traitement de surface (figure 5b), sans traitement de surface et avec 1% d'émulsion N41 (figure 5c), sans traitement de surface et avec 3% d'émulsion N41.
- avec traitement de surface :
   ∘ en présence d'un brouillard salin durant 300 heures, on observe un peu cloquage ;
   ∘ en chambre humide durant 300 heures, on observe un peu de cloquage ;
- sans traitement de surface :
   ∘ en présence d'un brouillard salin durant 300 heures, on observe un cloquage important pleine plaque ;
   ∘ en chambre humide durant 300 heures, on observe un peu de cloquage ;
- sans traitement de surface avec 1% N41 :
   ∘ en présence d'un brouillard salin durant 300 heures, on observe un peu de cloquage ;
   ∘ en chambre humide durant 300 heures, on observe un peu de cloquage ;
- sans traitement de surface avec 3 % N41 :
   ∘ en présence d'un brouillard salin durant 300 heures, on observe un peu de cloquage ;
   ∘ en chambre humide durant 300 heures, on observe un peu de cloquage

En conclusion, de très bons résultats sont obtenus lors de l'addition de l'émulsion N41 dans un primaire contenant du NOVINOX XCA02 sur un substrat HDG sans traitement de surface.

Les points 1% et 3% de N41 sur primaire NOVINOX XCA02 sans traitement de surface donnent de meilleurs résultats que le primaire contenant le NOVINOX XCA02 sur HDG sans traitement de surface et aussi sur HDG avec traitement de surface, le traitement de surface étant réalisé avec le produit non chromaté Chemetall Gardobond 4744.

Le point primaire NOVINOX XCA02 couplé à 1% de N41 donne des performances qui se rapprochent de celles du standard chromate de strontium.

Le Demandeur a également réalisé les tests suivants avec un primaire déposé :
- avec un traitement de surface de Gardobond 4744 :
   ∘ avec comme pigment anti-corrosion le NOVINOX XCA02 en présence d'un bouillard salin durant 500 heures (figure 6a) ;
   ∘ avec comme pigment anti-corrosion le L203E en présence d'un bouillard salin durant 500 heures (figure 6b) ;
   ∘ avec comme pigment anti-corrosion le NOVINOX XCA02 en chambre humide durant 500 heures (figure 6c) ;
   ∘ avec comme pigment anti-corrosion le L203E en chambre humide durant 500 heures (figure 6d) ;
- avec un traitement de surface de Gardobond 4744 :
   ∘ avec comme pigment anti-corrosion le NOVINOX XCA02 et 1% de l'émulsion 41, en présence d'un bouillard salin durant 500 heures (figure 7a) ;
   ∘ avec comme pigment anti-corrosion le NOVINOX XCA02 et 3% de l'émulsion 41, en présence d'un bouillard salin durant 500 heures (figure 7b) ;
   ∘ avec comme pigment anti-corrosion le NOVINOX XCA02 et 1% de l'émulsion 41, en chambre humide durant 500 heures (figure 7c) ;
   ∘ avec comme pigment anti-corrosion le NOVINOX XCA02 et 3% de l'émulsion 41, en chambre humide durant 500 heures (figure 7d).

Le point primaire NOVINOX XCA02 couplé à 3% de N41 donne des performances qui se rapprochent de celles du standard chromate de strontium sur traitement de surface Gardobond 4744.

Dans un troisième temps, un comparatif a été réalisé entre le nitrate de cérium incorporé sous forme de poudre dans le primaire contenant du NOVINOX XCA02 et le nitrate de cérium incorporé sous forme d'émulsion.

Les primaires ont été appliqués sur HDG sans traitement de surface.

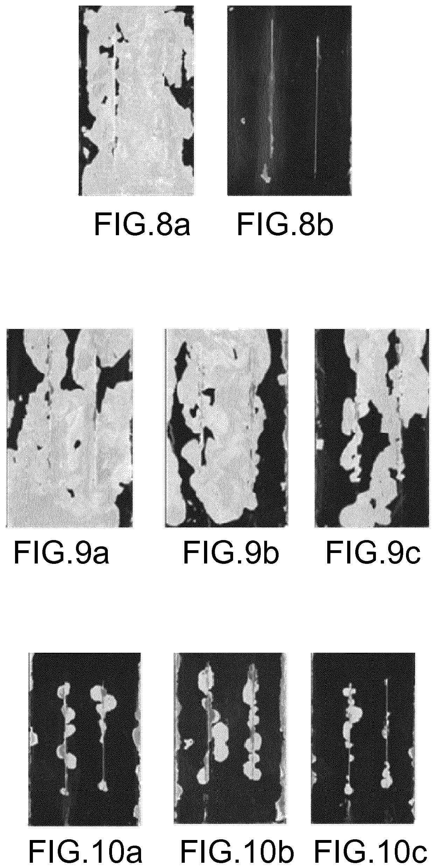

Les observations ont été réalisées au bout de 500 heures d'exposition au brouillard salin et sont illustrées par les figures mentionnées ci-après :
En présence d'un primaire sans nitrate de cérium, on obtient les observations pleine plaque :
- avec le pigment NOVINOX XCA02, illustrée en figure 8a ;
- avec le pigment L203E, illustrée en figure 8b.

En présence d'un primaire avec de la poudre de nitrate de cérium et pigment NOVINOX XCA02 :
- avec 0,02% en poids de poudre de nitrate de cérium (figure 9a) ;
- avec 0,04% en poids de poudre de nitrate de cérium (figure 9b) ;
- avec 0,12% en poids de poudre de nitrate de cérium (figure 9c).

En présence d'un primaire avec une émulsion de nitrate de cérium N41 et pigment NOVINOX XCA02 :
- avec 0,5% en poids d'émulsion (figure 10a) ;
- avec 1% en poids d'émulsion (figure 10b) ;
- avec 3% en poids d'émulsion (figure 10c).

Sur l'ensemble de ces figures, les zones sombres sont relatives au primaire qui résiste bien et adhère bien, les zones claires étant relatives au primaire qui a mal résisté et n'adhère plus après le traitement subi.

Ces tests mettent bien en évidence, les meilleures performances obtenues avec une émulsion comportant un agent de traitement de surface, plutôt qu'avec un agent de traitement de surface incorporé sous forme de poudre.

## Revendications

1. Composition destinée à recouvrir une surface métallique et comportant une phase continue organique, ladite phase continue organique comportant au moins un pigment anti-corrosion présentant une solubilité très faible en solution aqueuse, pouvant typiquement être de l'ordre de quelques ppm, **caractérisée en ce qu'**elle comporte en outre une phase hydrophile dispersée dans ladite phase continue organique,
ladite phase hydrophile comportant un agent chimique de traitement de surface de ladite surface métallique, l'agent chimique de traitement de surface présentant une solubilité en solution aqueuse proche de 100% ;
- ladite phase organique comprenant au moins une résine, un solvant
aromatique naphtalène et un solvant éther glycol ;
- ladite phase hydrophile étant de l'eau et/ou un solvant oxygéné et/ou un alcool et/ou une cétone ;
- ledit agent chimique de traitement de surface comprenant un composé de type nitrate, ou tungstate ou vanadate, ou permanganate, ou phosphate ou phosphomolybdate ou phosphotungstate ou phosphite ou sulfite ou molybdate ou tungstate ou chromate ou dichromate ou polyphosphate ou borate ou zirconate ou benzoate ou citrate ou salicylate ou adipate.

2. Composition selon la revendication 1, **caractérisée en ce qu'**elle comprend en outre au moins un agent tensio-actif, pouvant être anionique, cationique, amphotère, non ionique.

3. Composition selon l'une des revendications 1 ou 2, **caractérisée en ce que** la phase organique comprend au moins un additif et/ou au moins une charge minérale.

4. Composition selon l'une des revendications 1 à 3, **caractérisée en ce que** le pigment anti-corrosion est un sel métallique comprenant :
- un cation métallique et/ou alcalin et/ou alcalinoterreux, ledit métal étant du zinc, ou du magnésium, ou du calcium, ou de l'aluminium ou du potassium ou du strontium ou du baryum ou une terre rare ;
- un anion étant un chromate ou un phosphate ou un silicate ou un borate ou un carbonate ou un polyphosphate.

5. Composition selon l'une des revendications 1 à 4, **caractérisée en ce que** l'agent chimique de traitement de surface comprend un nitrate de cérium ou un nitrate de lanthane.

6. Composition selon l'une des revendications 1 à 4 , **caractérisée en ce que** l'agent chimique de traitement de surface comprend un tungstate d'ammonium ou de potassium ou de sodium.

7. Composition selon l'une des revendications 1 à 4, **caractérisé en ce que** l'agent chimique de traitement de surface comprend un orthovanadate de sodium ou un metavanadate de sodium.

8. Composition selon l'une des revendications 1 à 4, **caractérisée en ce que** l'agent chimique de traitement de surface comprend un permanganate d'ammonium ou de calcium ou de magnésium ou de sodium.

9. Composition selon l'une des revendications 1 à 4, **caractérisée en ce que** l'agent chimique de traitement de surface comprend un phosphate monocalcique ou un phosphate trisodique ou un phosphate de sodium dibasique ou un phosphate de sodium monobasique ou un polyphosphate de sodium ou un phosphate de sodium ou un phosphate de manganèse monobasique.

10. Composition selon l'une des revendications 1 à 4, **caractérisée en ce que** l'agent chimique de traitement de surface comprend un phosphomolybdate de sodium.

11. Composition selon l'une des revendications 1 à 4, **caractérisée en ce que** l'agent chimique de traitement de surface comprend un phosphotungstate de sodium.

12. Composition selon l'une des revendications 1 à 4, **caractérisée en ce que** l'agent chimique de traitement de surface comprend un phosphite de sodium dibasique ou un hypophosphite de sodium ou un hypophosphite de calcium ou un hypophosphite de magnésium ou un hypophosphite de manganèse.

13. Composition selon l'une des revendications 1 à 4, **caractérisée en ce que** l'agent chimique de traitement de surface comprend un sulfite de sodium ou de calcium.

14. Composition selon l'une des revendications 3 à 13, **caractérisée en ce que** les charges minérales comprennent de l'oxyde de titane et/ou de la silice et/ou du talc et/ou du mica et/ou de l'oxyde de fer et/ou des carbonates.

15. Composition selon l'une des revendications 3 à 13, **caractérisée en ce que** l'additif est un catalyseur ou un siccatif ou un accélérateur ou un durcisseur.

16. Composition selon l'une des revendications 1 à 15, **caractérisée en ce que** le solvant est à base de Dowanol PMA - acétate de 2-méthoxy-1-méthyl éthyle - de la société Brenntag et peut comprendre en outre du Solvesso 150 - Naphtalene C10H8 - de la société EXXON.

17. Procédé de fabrication d'une composition selon l'une des revendications 1 à 16, **caractérisé en ce qu'**il comprend :
- la réalisation d'une émulsion ou d'une micro-émulsion comprenant :
∘ la réalisation d'un mélange d'une phase hydrophile étant de l'eau et/ou un solvant oxygéné et/ou un alcool et/ou une cétone avec un agent de traitement de surface comprenant un composé de type nitrate, ou tungstate ou vanadate, ou permanganate, ou phosphate ou phosphomolybdate ou phosphotungstate ou phosphite ou sulfite ou molybdate ou tungstate ou chromate ou dichromate ou polyphosphate ou borate ou zirconate ou benzoate ou citrate ou salicylate ou adipate.et un solvant ;
∘ un traitement mécanique dudit mélange permettant d'obtenir ladite émulsion ou ladite micro-émulsion ;
- l'incorporation de ladite émulsion ou de ladite micro-émulsion dans une phase organique continue comprenant au moins une résine, un solvant aromatique naphtalène et un solvant éther glycol et comportant au moins un pigment anti-corrosion.

18. Procédé de fabrication d'une composition selon la revendication 17, **caractérisé en ce que** la réalisation dudit mélange est effectuée en présence d'un agent tensio-actif.

19. Procédé de fabrication d'une composition selon l'une des revendications 17 ou 18, **caractérisé en ce que** la phase organique comporte un solvant identique à celui de ladite émulsion ou micro-émulsion.

20. Procédé de fabrication d'une composition selon l'une des revendications 17 à 19, **caractérisé en ce que** la phase organique comprend en outre un solvant, une résine, un catalyseur et des charges minérales.

## Patentansprüche

1. Zusammensetzung, dazu bestimmt, eine metallische Oberfläche zu bedecken und umfassend eine durchgehende organische Phase, wobei die durchgehende organische Phase mindestens ein Korrosionsschutzpigment umfasst, welches eine sehr geringe Löslichkeit in wässriger Lösung aufweist, welche typischerweise einige ppm betragen kann, **dadurch gekennzeichnet, dass** sie ferner eine in der durchgehenden organischen Phase dispergierte hydrophile Phase umfasst,
wobei die hydrophile Phase ein chemisches Oberflächenbehandlungsmittel der metallischen Oberfläche umfasst, wobei das chemische Oberflächenbehandlungsmittel eine Lösbarkeit in wässriger Lösung von nahezu 100 % aufweist;
- wobei die organische Phase mindestens ein Harz, ein aromatisches Naphthalin-Lösemittel und ein Glycolether-Lösemittel umfast;
- wobei die hydrophile Phase Wasser und/oder ein mit Sauerstoff angereichertes Lösemittel und/oder ein Alkohol und/oder ein Keton ist;
- wobei das chemische Oberflächenbehandlungsmittel eine Verbindung vom Typ Nitrat, oder Wolframat oder Vanadat, oder Permanganat, oder Phosphat oder Phosphomolybdat oder Phosphowolframat oder Phosphit oder Sulfit oder Molybdat oder Wolframat oder Chromat oder Dichromat oder Polyphosphat oder Borat oder Zirkonat oder Benzoat oder Citrat oder Salicylat oder Adipat umfasst.

2. Zusammensetzung nach Anspruch 1, **dadurch gekennzeichnet, dass** sie ferner mindestens ein oberflächenaktives Mittel umfasst, welches anionisch, kationisch, amphoter oder nicht ionisch sein kann.

3. Zusammensetzung nach einem der Ansprüche 1 oder 2, **dadurch gekennzeichnet, dass** die organische Phase mindestens einen Zusatzstoff und/oder mindestens einen mineralischen Füllstoff umfasst.

4. Zusammensetzung nach einem der Ansprüche 1 bis 3, **dadurch gekennzeichnet, dass** das Korrosionsschutzpigment ein metallisches Salz ist, welches Folgendes umfasst:
- ein metallisches und/oder alkalisches und/oder erdalkalisches Kation, wobei das Metall Zink, oder Magnesium, oder Kalzium, oder Aluminium oder Kalium oder Strontium oder Barium oder eine Seltenerde ist;
- ein Anion, welches ein Chromat oder ein Phosphat oder ein Silikat oder ein Borat oder ein Carbonat oder ein Polyphosphat ist.

5. Zusammensetzung nach einem der Ansprüche 1 bis 4, **dadurch gekennzeichnet, dass** das chemische Oberflächenbehandlungsmittel ein Zeriumnitrat oder ein Lanthannitrat umfasst.

6. Zusammensetzung nach einem der Ansprüche 1 bis 4, **dadurch gekennzeichnet, dass** das chemische Oberflächenbehandlungsmittel ein Ammonium- oder ein Kalium- oder ein Natriumwolframat umfasst.

7. Zusammensetzung nach einem der Ansprüche 1 bis 4, **dadurch gekennzeichnet, dass** das chemische Oberflächenbehandlungsmittel ein Natriumorthovanadat oder ein Natriummetavanadat umfasst.

8. Zusammensetzung nach einem der Ansprüche 1 bis 4, **dadurch gekennzeichnet, dass** das chemische Oberflächenbehandlungsmittel ein Ammonium- oder ein Kalzium- oder ein Magnesium- oder ein Natriumpermanganat umfasst.

9. Zusammensetzung nach einem der Ansprüche 1 bis 4, **dadurch gekennzeichnet, dass** das chemische Oberflächenbehandlungsmittel ein Monokalziumphosphat oder ein Trinatriumphosphat oder ein Dinatriumphosphat oder ein Mononatriumphosphat oder ein Natriumpolyphosphat oder ein Natriumphosphat oder ein Monomanganphosphat umfasst.

10. Zusammensetzung nach einem der Ansprüche 1 bis 4, **dadurch gekennzeichnet, dass** das chemische Oberflächenbehandlungsmittel ein Natriumphosphomolybdat umfasst.

11. Zusammensetzung nach einem der Ansprüche 1 bis 4, **dadurch gekennzeichnet, dass** das chemische Oberflächenbehandlungsmittel ein Natriumphosphowolframat umfasst.

12. Zusammensetzung nach einem der Ansprüche 1 bis 4, **dadurch gekennzeichnet, dass** das chemische Oberflächenbehandlungsmittel ein Dinatriumphosphit oder ein Natriumhypophosphit oder ein Kalziumhypophosphit oder ein Magnesiumhypophosphit oder ein Manganhypophosphit umfasst.

13. Zusammensetzung nach einem der Ansprüche 1 bis 4, **dadurch gekennzeichnet, dass** das chemische Oberflächenbehandlungsmittel ein Natrium- oder ein Kalziumsulfit umfasst.

14. Zusammensetzung nach einem der Ansprüche 3 bis 13, **dadurch gekennzeichnet, dass** die mineralischen Füllstoffe Titanoxid und/oder Silizium und/oder Talkum und/oder Glimmer und/oder Eisenoxid und/oder Carbonate umfassen.

15. Zusammensetzung nach einem der Ansprüche 3 bis 13, **dadurch gekennzeichnet, dass** der Zusatzstoff ein Katalysator oder ein Trocknungsmittel oder ein Beschleuniger oder ein Härtemittel ist.

16. Zusammensetzung nach einem der Ansprüche 1 bis 15, **dadurch gekennzeichnet, dass** das Lösemittel auf Dowanol PMA - 2-Methoxy-1-methylethylacetat - der Firma Brenntag basiert und ferner Solvesso 150 - Naphthalin C10H8 - der Firma EXXON umfassen kann.

17. Herstellungsverfahren einer Zusammensetzung nach einem der Ansprüche 1 bis 16, **dadurch gekennzeichnet, dass** es folgende Schritte umfasst:
- die Herstellung einer Emulsion oder einer Mikroemulsion, Folgendes umfassend:
• die Herstellung einer Mischung aus einer hydrophilen Phase, bestehend aus Wasser und/oder einem mit Sauerstoff angereichertem Lösemittel und/oder einem Alkohol und/oder einem Keton mit einem Oberflächenbehandlungsmittel, umfassend eine Verbindung vom Typ Nitrat, oder Wolframat oder Vanadat, oder Permanganat, oder Phosphat oder Phosphomolybdat oder Phosphowolframat oder Phosphit oder Sulfit oder Molybdat oder Wolframat oder Chromat oder Dichromat oder Polyphosphat oder Borat oder Zirkonat oder Benzoat oder Citrat oder Salicylat oder Adipat und ein Lösemittel;
• eine mechanische Behandlung der Mischung, welche es ermöglicht, die Emulsion oder die Mikroemulsion zu erzielen;
- das Einarbeiten der Emulsion oder der Mikroemulsion in eine durchgehende organische Phase, welche mindestens ein Harz, ein aromatisches Naphthalin-Lösemittel und ein Glycolether-Lösemittel umfast und mindestens ein Korrosionsschutzpigment umfasst.

18. Herstellungsverfahren einer Zusammensetzung nach Anspruch 17, **dadurch gekennzeichnet, dass** die Herstellung der Mischung im Beisein eines oberflächenaktiven Mittels erfolgt.

19. Herstellungsverfahren einer Zusammensetzung nach einem der Ansprüche 17 oder 18, **dadurch gekennzeichnet, dass** die organische Phase ein Lösemittel umfasst, welches identisch mit demjenigen der Emulsion oder der Mikroemulsion ist.

20. Herstellungsverfahren einer Zusammensetzung nach einem der Ansprüche 17 bis 19, **dadurch gekennzeichnet, dass** die organische Phase ferner ein Lösemittel, ein Harz, einen Katalysator und mineralische Füllstoffe umfasst.

## Claims

1. A composition intended to cover a metal surface and having an organic continuous phase, said organic continuous phase having at least one anticorrosive pigment exhibiting a very low solubility in aqueous solution, which can typically be of the order of a few ppm, **characterized in that** it further has an hydrophilic phase dispersed in said organic continuous phase,
said hydrophilic phase having a chemical agent for the surface treatment of said metal surface, the surface treatment chemical agent exhibiting a solubility in aqueous solution of approximately 100%;
- said organic phase comprising at least a resin, a naphthalene aromatic solvent and an ether glycol solvent;
- said hydrophilic phase being water and/or an oxygenated solvent and/or and alcohol and/or a ketone;
- said surface treatment chemical agent comprising a compound of nitrate or tungstate or vanadate or permanganate or phosphate or phosphomolybdate or phosphotungstate or phosphite or sulfite or molybdate or tungstate or chromate or dichromate or polyphosphate or borate or zirconate or benzoate or citrate or salicylate or adipate type.

2. The composition according to claim 1, **characterized in that** it further comprises at least one surface-active agent which can be anionic, cationic, amphoteric, nonionic.

3. The composition according to any one of claims 1 or 2, **characterized in that** the organic phase comprises at least one additive and/or at least one mineral filler.

4. The composition according to one of claims 1 to 3, **characterized in that** the anticorrosive pigment is a metal salt comprising:
- a metal and/or alkali metal and/or alkaline earth metal cation, said metal being zinc or magnesium or calcium or aluminum or potassium or strontium or barium or a rare earth;
- an anion being a chromate or a phosphate or a silicate or a borate or a carbonate or a polyphosphate.

5. The composition according to one of claims 1 to 4, **characterized in that** the surface treatment chemical agent comprises a cerium nitrate or a lanthanum nitrate.

6. The composition according to one of claims 1 to 4, **characterized in that** the surface treatment chemical agent comprises an ammonium or potassium or sodium tungstate.

7. The composition according to one of claims 1 to 4, **characterized in that** the surface treatment chemical agent comprises a sodium orthovanadate or a sodium metavanadate.

8. The composition according to one of claims 1 to 4, **characterized in that** the surface treatment chemical agent comprises an ammonium or calcium or magnesium or sodium permanganate.

9. The composition according to one of claims 1 to 4, **characterized in that** the surface treatment chemical agent comprises a monocalcium phosphate or a trisodium phosphate or a dibasic sodium phosphate or a monobasic sodium phosphate or a sodium polyphosphate or a sodium phosphate or a monobasic manganese phosphate.

10. The composition according to one of claims 1 to 4, **characterized in that** the surface treatment chemical agent comprises a sodium phosphomolybdate.

11. The composition according to one of claims 1 to 4, **characterized in that** the surface treatment chemical agent comprises a sodium phosphotungstate.

12. The composition according to one of claims 1 to 4, **characterized in that** the surface treatment chemical agent comprises a dibasic sodium phosphite or a sodium hypophosphite or a calcium hypophosphite or a magnesium hypophosphite or a manganese hypophosphite.

13. The composition according to one of claims 1 to 4, **characterized in that** the surface treatment chemical agent comprises a sodium or calcium sulfite.

14. The composition according to one of claims 3 to 13, **characterized in that** the mineral fillers comprise titanium oxide and/or silica and/or talc and/or mica and/or iron oxide and/or carbonates.

15. The composition according to one of claims 3 to 13, **characterized in that** the additive is a catalyst, or a drier, or an accelerator, or a curing agent.

16. The composition according to one of claims 1 to 15, **characterized in that** the solvent is based on Dowanol PMA - 2-methoxy-1-methylethyl acetate - from Brenntag and can further comprise Solvesso 150 - naphthalene C₁₀H₈ - from EXXON.

17. A process for the manufacture of a composition according to one of claims 1 to 16, **characterized in that** it comprises:
- the preparation of an emulsion or of a microemulsion comprising:
o the preparation of a mixture of a hydrophilic phase, which is water and/or an oxygenated solvent and/or an alcohol and/or a ketone, with a surface treatment agent, which comprises a compound of nitrate or tungstate or vanadate or permanganate or phosphate or phosphomolybdate or phosphotungstate or phosphite or sulfite or molybdate or tungstate or chromate or dichromate or polyphosphate or borate or zirconate or benzoate or citrate or salicylate or adipate type, and a solvent;
∘ a mechanical treatment of said mixture which makes it possible to obtain said emulsion or said microemulsion;
- the inclusion of said emulsion or of said microemulsion in an organic continuous phase, comprising at least a resin, a naphthalene aromatic solvent and an ether glycol solvent and having at least one anticorrosive pigment.

18. The process for the manufacture of a composition according to claim 17, **characterized in that** the preparation of said mixture is carried out in the presence of a surface-active agent.

19. The process for the manufacture of a composition according to either one of claims 17 or 18, **characterized in that** the organic phase has a solvent identical to that of said emulsion or microemulsion.

20. The process for the manufacture of a composition according to one of claims 17 to 19, **characterized in that** the organic phase further comprises a solvent, a resin, a catalyst and mineral fillers.
